# EUROPEAN PATENT SPECIFICATION

(11) **EP 0 676 142 B1**
(45) Date of publication and mention of the grant of the patent: **08.11.2000**
(21) Application number: 95200720.1
(22) Date of filing: 22.03.1995
(51) Int. Cl.: A21D 10/00, A21D 8/04, A21D 6/00

(54) **Mother dough**
Vorteig
Pâté à travail indirect

(30) Priority: 01.04.1994 EP 94200903
(43) Date of publication of application: 11.10.1995
(73) Proprietor: DSM N.V., 6411 TE Heerlen (NL)
(72) Inventor: Smit, Hendrik, E-08034 Barcelona (ES); Schutte, Ernst Jan, NL-5237 KW 's-Hertogenbosch (NL)
(74) Representative: Matulewicz, Emil Rudolf Antonius, Dr.

(56) References cited:
- EP-A- 0 504 970
- WO-A-89/10059
- DE-A- 1 442 040
- DE-A- 2 118 637
- FR-A- 2 585 926
- NL-A- 8 501 467
- US-A- 3 649 304
- US-A- 4 666 719
- DATABASE WPI Section Ch, Week 8921 Derwent Publications Ltd., London, GB; Class D11, AN 89-154848 & JP-A-01 095 722 (ONIZAWA R.) , 13 April 1989

## Description

The present invention relates to an instant mother dough. In particular, it relates to a mother dough preparation in a solid form suitable for packaging, storage and transport.

A mother dough process is the term conventionally applied to a method of preparing a bread dough in several stages starting with a flour fermentation stage which may take several days. A mother dough is the intermediate fermentation product prepared by this stage starting with a mixture of water and flour.

The initial water/flour mixture is inoculated with specific microorganisms, such as lactic acid producing bacteria (for example a Lactobacillus) or Saccharomyces cerevisiae (baker's yeast) depending on the type of bread to be prepared. This mixture is fermented at a constant temperature. The temperature depends on the total length of the fermentation, but is usually between 20 and 45°C. The fermentation period may vary from 2 hours to about 48 hours depending on the process and the nature of the product desired. This fermentation process may be divided in two or more steps with different fermentation conditions in each step.

In a typical fermentation for preparation of a mother dough, exponential growth of the micro-organisms starts after 4 to 6 hours. In the last part of the fermentation, the growth of micro-organisms is constant due to substrate depletion. In this last phase, certain changes in the flour take place which benefit the rheology of the final dough. After this fermentation, a dough is prepared from (part of) the resulting ferment (the mother dough), flour and water. The remaining dough ingredients for the desired baked product are added, followed by mixing, proofing and baking of the dough. In general, the final dough will contain 0.5 to 20% w/w of the mother dough.

In this way bread with favourable taste and flavour can be obtained and in some cases natural (organic) acids are formed which may have a function in preparing bread from rye. When part of the dough is not used for baking, this part can be used for the preparation of a new mother dough. For example, 0.5 to 20% w/w of the dough may be used for producing a new mother dough. This part can be diluted with water and optionally flour is added to start a new fermentation.

Mother dough processes are used in bread making in many countries and are referred to, for example, by such terms as sponge and dough, mother leaven, sour dough, sauerteig or masa madre process. In most cases, sour dough bread is produced having characteristic properties including its particular crustiness and sour taste.

A conventional mother dough process has some disadvantages:

Flexibility: If larger quantities of bread are required than originally planned, fresh mother dough is not available in time. This means that the recipe has to be changed. For example, smaller percentages of mother dough have to be used or chemical acids have to be added.

Constant quality: The mother dough process may take several days. Preparation of a mother dough required for use on a Wednesday may, for example, have to be started on the previous Monday. Bread production however does not occur on all days (weekends, holidays, etc.) so sometimes the process for preparing the mother dough has to be changed (e.g. a shorter fermentation time or higher temperature). Consequently, the quality of the mother dough and thus the final dough is variable. Furthermore, the storage of a conventional mother dough preparation may present problems. For example, the temperature of storage may vary day by day and during the different seasons leading again to variability of the mother dough.

Infection or repression of a desired micro-organism may occur if portions of mother dough are used as a starter for the production of new mother dough. Infection or repression of a desired micro-organism may increase with each cycle and lead to a mother dough being formed which does not have the desired properties, e.g. flavour properties.

Labour: Preparation of the mother dough is furthermore quite labour intensive.

A partial solution of the above problems is a freeze dried powder obtained from a mother dough. Although this product is storage stable, the flavour components such as lactic acid or acetic acid and aromatic alcohols, which define part of the taste, disappear during the freeze drying. It has been found that of the mentioned volatile components only 50% are retained in the dried product.
Another severe disadvantage of a freeze-dried mother dough is the tendency to form dust during weighing or dosing which may create allergies in people who handle the product or cause problems with cleaning the equipment or the production area used.

The aim of the present invention is to overcome the above disadvantages. The invention provides an instant mother dough and a process for the preparation of such a mother dough. In particular, in one aspect, the present invention provides a method of preparing a mother dough in a solid form which has a weight of about 10 g to 5 kg and which is capable of manual division to provide dosage units for mixing of a dough for a baked product, but resistant to disintegration during packaging and transport, said method comprising:
(a) preparing a mixture of ingredients comprising the functional ingredients of a fermentation mother dough and including a binding component selected from water, edible oils, fats, fat-related compounds, gel-forming agents and combinations thereof, and
(b) cooling and/or compacting said mixture to obtain said solid form.

A mother dough preparation thus obtained provides a convenient and immediate source of mother dough dosage units for preparation of a baked product. Thus, as further aspects, the present invention additionally provides a mother dough preparation in a solid form prepared in accordance with the invention, dosage units derived therefrom and a method of preparing a baked product dough wherein a solid form of the invention is combined with the other required ingredients. By using an instant mother dough of the invention, a baker can ensure a product of a constant quality.

By baked product is meant throughout this text, bread, including speciality breads such as panettone and fruit bread, bread related products such as crackers, puff pastry, focaccia, doughnuts, pizzas, bagles, pritzels and similar baked goods. When the mother dough contains sour ingredients, the resulting bread product will also taste (slightly) sour. Usually bread based on rye flour will taste sourer than bread based on wheat flour. For example the ratio lactic acid/acetic acid may be 3, the acid numbers 6-10 and the pH 4-5 for rye bread.

A starting mother dough for preparation of a solid form according to the invention may be prepared by fermentation in a flour/water mixture as described hereinabove, followed by one or more dewatering steps resulting in a concentrated product. This product may advantageously, for example, contain about 25 to 75% w/w water. The micro-organism present may desirably be a lactic acid producing bacterium or baker's yeast such as Saccharomyces cerevisiae. The micro-organism may be present in an amount of 0.5 to 20% w/w (based on dry matter). T h e concentrated product preferably comprises 0.5 to 15%, and more preferably 1 to 10% w/w of micro-organism.

Another way of preparing a starter mixture for preparation of a solid form according to the invention is to bring together the essential ingredients of a mother dough. According to this embodiment of the invention, flour and other appropriate ingredients for a mother dough (e.g. acid producing bacteria, acids produced by such bacteria, baker's yeast, enzymes) are mixed to produce a mother dough. Generally wheat flour or rye flour will be used as the flour. However, depending on the finally desired product, other flours and starches such as soy flour and corn starch can be used. The product may be concentrated by one or more dewatering steps. Optionally additives, such as baking improving agents, fillers and one or more binding agents may be added. Such additives may be added before the mother dough is concentrated, but preferably will be added after a dewatering step.

In accordance with the invention, a mother dough thus prepared is then converted to the form of homogeneous compact solid forms such as blocks, spheres, pearls, threads or sausages. Such a product, which may be pre-cut and pre-measured, is easy to use, easily stored, and as the product is easily wrapped, hygienic.

A homogeneous compact solid form of the invention may have a considerable but handy size. It may contain a considerable part of the total baked product formulation and may be dosed flexibly much like fresh compressed yeast blocks. In general, 0.5 to 20% w/w (based on dry matter) of the compact product will be used in the preparation of a final dough.

The formation of a solid shape may be achieved in a number of ways. To present practical examples but by no means limiting the possibilities, one may contemplate the formation of solid shapes in the below listed ways.

According to a preferred embodiment, formation of a solid form mother dough preparation of the invention is achieved by pressing of the mixture of ingredients in a mould. In this case, the solid form may be formed starting with a powder mixture of mother dough ingredients to which a binding component is added. A force sufficient for making the components stick together is employed. Finer powders are preferred as they are easier to compact. A liquid component like water or oil may be added as the binding component. Adding fat or fat-related compounds in amounts from 1 to 95% by weight (preferably 2 to 75%, more preferably 3 to 50% and even more preferred 5 to 30%) to a dry powder has also been found to be a good way of achieving a stable solid form after pressing.

According to another preferred embodiment, agglomeration is achieved using an extruder. The outlet may be fitted with a cutter to make pre-cut and pre-measured blocks.

According to a further preferred embodiment, a concentrated or directly formed mother dough, optionally supplemented with additives such as baking improving agents and fillers, is dissolved in (heated) fat or water. The formed composition is then cooled to the solid form. In case of use of water, a gel forming components such as a gum, protein or starch can be added to help form the solid form. A water containing mixture of one or more of the above mentioned gel-forming component may be used.

The advantage of such a gel formulation of the mother dough is that it does not require any fatty components for forming and retaining its shape. In addition, no strong pressing forces are required during manufacture.

Any suitable gel forming agent may be used to achieve a solid form. Random examples by no means forming a limiting list are alginate with calcium salts, kappa carrageenan with calcium or potassium salts, xanthan gum with locust bean gum, agar-agar, furcellaran, gelatin, low methoxyl pectin with calcium salts, high methoxyl pectin in a high solids formulation, protein, denatured or gelled with other components, pregelatinized starch and mixtures thereof.

A gel network will be used that after formation is still dissolvable in water or that will melt at the elevated temperatures that are reached during dough mixing. As a suggested practical method, one could add the gelling agent in a watery solution to the other components in a dry premix.

A mixture of a melted fat or fat-related material (for example, lipids, emulsifiers, fat hydrolysis products and esters or ethers thereof) and other appropriate components for a mother dough preparation may be cooled. The amount of fatty components must be sufficient so that the fatty matter forms a continuous phase between the other components. The amount of fatty material required will vary with the characteristics of the total composition, but will not need to exceed 95%. On cooling, the fat will crystallize and form a continuous solid phase holding the solid shape together. The fat melting point should be below or at the maximal dough temperature attained during mixing so that disintegration of the solid form and release of the active components into the dough occurs during mixing. Such a formulation has the advantages that no strong pressing force is needed for manufacture and storage is possible at ambient temperatures. By choosing the fat melting temperature, one may find an optimal balance between a moderate heating step and not too cold storage and an easy liberation of active components.

Alternatively, a mixture of an oil or liquid fat-related material (e.g. selected from emulsifiers, fat hydrolysis products and their esters and ethers) and other appropriate components for a mother dough preparation may be cooled to a temperature beneath that at which the major part of the fat crystallizes. The amount of solid fatty components at that point again must be sufficient so that the fatty matter forms the continuous phase between the other components. The amount of fatty material required will vary with the characteristics of the total composition, but will not need to exceed 95%. The advantage of this method is that none of the ingredients needs to be exposed to a high temperature. This is an advantage when using components like food enzymes or unstable esters, such as the often used diacetyl tartaric ester derivatives of monoglycerides or unstable or volatile flavours.

Heating a mixture containing water and starch in addition to other functional components to a temperature above the gelatinization temperature of the starch used will also result in a solid form on cooling because of the starch network formed.

A particularly preferred method according to the invention for preparing a mother dough in a solid form comprises the steps of:
(i) preparing a mother dough by fermentation in a water/flour mixture,
(ii) adding flour to obtain a slurry,
(iii) steam-heating the slurry obtained in step (ii) to cause gelatinization, and
(iv) cooling to form a solid form.
Such a method is described more fully in following Example 4.

Also combinations of the above mentioned techniques may be used which may give additional advantages.

An important requirement for a mother dough preparation in a solid form is ready ability to fall apart when used in the mixing of a dough. The solid form preparation methods of the present invention enable such a solid form to be achieved by appropriate adjustment of pressing speed, melting temperature or gelling component.

As hereinbefore indicated, a solid composition according to the invention may contain, in addition to functional ingredients of a conventional mother dough, additives such as baking improving agents, fillers and one or more binding agents.

By filler is meant any ingredient in the formulation that has as its main function the provision of volume at a low cost. In addition to this function, different fillers have different effects on the final product consistency and its ease of manufacture.

Commonly used fillers include flours like cereal and leguminous flours and their fractions, optionally toasted, malt flours, calcium salts like calcium carbonate and calcium phosphate and sodium salts like sodium chloride and sodium phosphate. Particularly preferred fillers which may be used in a solid composition of the present invention are flours, starch and calcium carbonate.

By binding agent is meant any ingredient that may be used to form or improve the structure, texture or consistency of the final solid form. Suitable compounds/mixtures for use as binding agents have previously been mentioned above. As examples of binding agents but not as a limiting list, one may consider fats and fat-related compounds like phospholipids, fat hydrolysis products and their esters and ethers, emulsifiers, water optionally with hydrocolloids like gelatin, pectin, guar, alginates, locust bean gum, gellan gum, xanthan, furcellaran, carrageenans, carboxymethyl cellulose, modified or native starch, all together with any salts or other additives required for gelation, proteins from milk, gluten and soy, low amounts of water, dextrins, sugars, alone or in combination.

In forming a solid form of the invention, compaction should not be carried out in such a way that tablets are formed as these are not easily divided making it impossible to dose continuously (in a flexible way). To comply with the need for flexible dosing, tablets need to be small or have been designed to break into distinct fractions. The present invention relates to larger solid forms which are easily divided manually and thus allow flexible dosing in analogous manner to use of fresh compressed yeast. Thus the invention provides compact solid form compositions which mimic the ease of use of fresh compressed yeast in that they can be used either as whole blocks or divided into portions thereby allowing the dosage to be adjusted exactly to the requirements of the dough.

A solid form composition prepared by a method of the invention as hereinbefore described will generally have a weight of about 10 grams to 5 kg, preferably 25 grams to 2 kg, more preferably 50 to 1000 grams. To mimic the ease of use of compressed yeast, the formulation is adjusted so that the crumbliness is sufficient for manual division by gentle pulling or bending by the fingers, but it is not liable to fall apart during packaging and transport.

Flexible and precise dosing is important for the baker as it enables more economic baking and prevents over or under dosing of active ingredients. In general, tablets can be used for addition of a few ingredients which are difficult to dose like enzymes and ascorbic acid, but are not suitable, for example, for dosing complete bread improving formulations. By means of a solid form composition of the present invention, addition to a dough of higher dose ingredients like fats may be achieved or even addition of a larger part of a baked product formulation, as is common practice with concentrated bread mixes. Tablets are produced only by pressing powders forcefully into a mould. This production procedure presents problems if it is desired to incorporate recrystallisable components like diactyl tartaric esters of monoglycerides as these will tend to form strong structures on compressing that will not fall apart easily during the mixing of the dough.

A solid form composition of the present invention based on an oil or fat advantageously contains 1 to 95% by weight of oil, fat or fat related compounds. Preferably 2 to 75% by weight, more preferably 3 to 50% and even more preferably 5 to 30% by weight of oil, fat or fat-related compound may be incorporated.

Where water is used in the formation of a solid form composition of the invention, generally the composition will contain 3 to 90%, preferably 5 to 75%, even more preferably 5 to 50%, by weight of water. The binding component may, for example, be the aqueous solvent of a fermentation juice or an aqueous diluted fermentation juice (see Examples 1 and 2).

Fermentation juices are commercially available e.g. 'Fermentsauer' produced by Uniferm GmbH & Co, Germany or can be produced by fermenting a suitable flour such as rye flour. Suitable fermentation juices for the purpose of the present invention contain lactic acid and acetic acid e.g. 3-10 g/Kg lactic acid and 0.5-5 g/kg acetic acid.

A solid form composition according to the invention can incorporate any additive for a bread dough, for example, one or more baking improving agents of even parts or all or the major ingredients like flour, fat or sugar. Ingredients commonly used as baking improving agent include ascorbic acid, flour components like gluten and starch, fats, lipids and related compounds, emulsifiers, sour dough components like alcohols and organic acids such as acetic, malic, fumaric, citric, tartaric and lactic acid, baking powders, salt, yeasts, lactic acid bacteria, fermentation juices, milk constituents, soy flour components, (roasted) malt flour, sugars, flavours, colours and food enzymes like amylases, xylanases, glucanases lipases, proteases and oxidases.

The following examples illustrate the invention:

### EXAMPLES

### Example 1

2.0 kg fresh yeast (compressed yeast), 2.0 kg wheat flour, 73.5 kg corn starch and 3.0 kg Fermizyme H400 (an α-amylase/hemicellulase preparation of Gist-Brocades) were mixed. Subsequently, 28 kg Fermentsauer (Uniferm, Germany), 20 kg water and 0.8 kg soy oil were added. The mixing was carried out for 2.5 minutes at low speed followed by 10 minutes mixing at a higher speed. The resulting mixture was extruded and then compressed into blocks of 0.5 kg.

The initial mixture was readily extruded and then compressed to obtain blocks of the correct consistency having a weight/volume ratio higher than compressed yeast. Blocks thus obtained are easy to pack in normal yeast paper or cellophane.

### Example 2

15 kg fresh yeast, 419 kg wheat flour and 288 kg corn starch were mixed. Subsequently, 270 kg Fermentsauer, 3.5 kg ascorbic acid, 6.0 kg Fermizyme™ H400 and 1.1 kg soy flour were added. The formed composition was mixed at a moderate speed for 20 minutes and then extruded and compressed to obtain blocks having a suitable consistency for use as an instant mother dough.

### Example 3

Doughs were prepared of flour (100 parts), water (53 60 parts), yeast (variable), mother dough and salt (2 parts). Each dough was mixed in an appropriate mixer (slow mixer (type Phebus) mixing time 20 minutes) so that a well-developed dough was obtained (dough temperature approx 24°C). After mixing, dough pieces of 350 g were weighed and bolls were formed. After a proofing time of 10 minutes, the bolls were shaped into a longitudinal shape and proofed for 120 minutes at approx 25°C and RH of 90%. The dough pieces were then cut and baked for 25 minutes at 260°C.

As the mother dough, a mother dough prepared according to the traditional way (15 parts) or a mother dough produced according to Example 2 (1.5 parts) was used. Also a baked product without a mother dough was produced. The results are given in Table I. This table shows that the mother dough according to the invention was not only a good substitute for the traditional mother dough, but in some respects the finally produced baked product produced using the mother dough of the invention was even superior to the baked product produced with the classical mother dough.

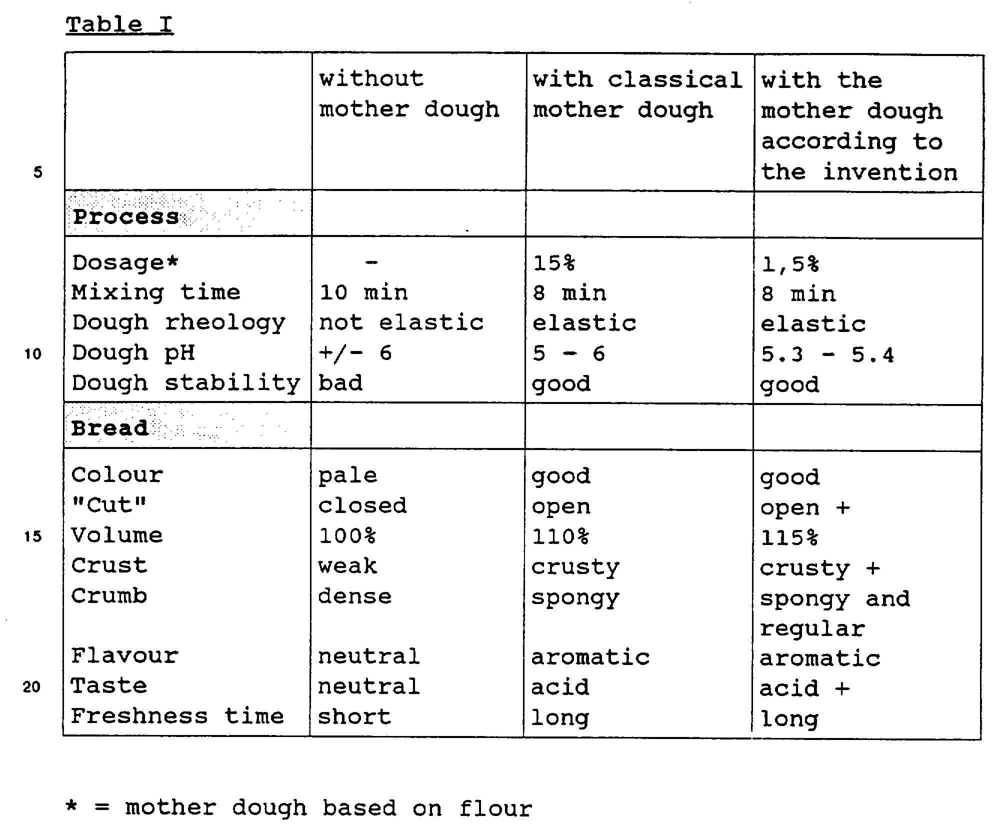

### Example 4

Heterofermentative lactic acid bacteria we fermented in a solution of water, yeast extract and sugar. During this fermentation,lactic acid, acetic acid and alcohol were produced. About 25% of the formed acid was lactic acid.

10% by weight of (French) rye flour was then added to the fermentation broth followed by a 'second fermentation', for 10 hours.

After the 'second fermentation' the pH-value was adjusted to 2.4-2.5 by addition of (concentrated) hydrochloric acid. After pH adjustment, a second amount of rye flour (about 3.5% by weight depending on the quality of the rye flour) was added to the mash.

The fermented mash/rye flour slurry was heated by injection of steam to 68°C (heating rate about 0.5°C/min) and maintained at this temperature for 2 hours. The resulting gelatinized slurry was then cooled to 20°C as rapidly as possible.

## Claims

1. A method for preparing a mother dough in a solid form, which has a weight of about 10 g to 5 kg is capable of manual division by gentle pulling or bending by the fingers to provide dosage units for mixing of a dough for a baked product, but resistant to disintegration during packaging and transport, said method comprising:
(a) preparing a mixture of ingredients comprising the functional ingredients of a fermentation mother dough and including a binding component selected from water, edible oils, fats, fat-related compounds, gel-forming agents and combinations thereof, and
(b) cooling and/or compacting said mixture to obtain said solid form.

2. A method as claimed in claim 1 wherein in step (b) a mixture of ingredients is compacted including 3 to 50% by weight of water as the binding component.

3. A method as claimed in claim 1 or claim 2 wherein the binding component comprises the aqueous solvent of a fermentation juice or aqueous diluted fermentation juice.

4. A method as claimed in claim 1 wherein said mixture of ingredients includes 1 to 95% by weight of a binding agent selected from edible oils, fats, fat-related compounds and combinations thereof.

5. A method as claimed in claims 1 to 4 wherein in step (a) ingredients comprising flour, a lactic acid-producing bacterium and/or yeast and a fermentation juice containing lactic acid and acetic acid are combined.

6. A method as claimed in any one of claims 1 to 4 wherein in step (a) a mother dough is prepared by fermentation in a water/flour mixture followed by one or more dewatering steps.

7. A method as claimed in any one of the preceding claims wherein in step (a) a filler material is added selected from flour, starch and calcium carbonate.

8. A method as claimed in any one of claims 1, 6 and 7 which comprises:
(i) preparing a mother dough by fermentation in a water/flour mixture,
(ii) adding flour to obtain a slurry,
(iii) steam-heating the slurry obtained in step (ii) to cause gelatinization, and
(iv) cooling to form a solid form.

9. A method as claimed in claim 6 or claim 8 wherein said fermentation is carried out using lactic acid-producing bacterium and/or yeast.

10. A method as claimed in any one of claims 1 to 7 and 9 wherein in step (b) formation of said solid form is by compaction comprising using an extruder or pressing of the mixture of ingredients in a mould.

11. A method as claimed in any one of the preceding claims wherein said solid form is a block, sphere, pearl, thread or sausage.

12. A mother dough preparation in a solid form obtained by a method as claimed in any one of the preceding claims.

13. A mother dough in a solid form consisting of flour, a selected microorganism and a binding component selected from water, edible oils, fats, fat-related compounds, gel-forming agent and combinations thereof, having a crumbliness which is sufficient for manual division by gentle pulling or bending by the fingers, but is not liable to fall apart during package and transport, which solid form has a weight of about 10 g to 5 kg.

14. A dosage unit derived from a mother dough preparation as claimed in claim 12 or 13 for use in mixing a dough for a baked product.

15. A process for preparing a dough for a baked product which comprises mixing a mother dough preparation as claimed in claim 12 or 13 or one or more dosage units of a mother dough preparation as claimed in claim 14 with the other required ingredients.

## Patentansprüche

1. Verfahren zum Herstellen eines Vorteigs in fester Form, der ein Gewicht von etwa 10 g bis 5 kg aufweist und durch leichtes Ziehen oder Verbiegen mit den Fingern leicht von Hand teilbar ist, um Dosiereinheiten für das Mischen eines Teigs für eine Backware bereitzustellen, jedoch während des Verpackens und des Transportierens gegenüber einem Zerfall widerstandsfähig ist, wobei das Verfahren folgende Stufen beinhaltet:
a) Zubereiten eines Gemisches aus Bestandteilen, welche die funktionellen Bestandteile eines Fermentationsvorteigs und eine Bindungskomponente, ausgewählt aus Wasser, Speiseölen, Fetten, mit Fett verwandten Verbindungen, Gelbildnern und Kombinationen hiervon, enthalten, sowie
b) Abkühlen und/oder Verdichten des Gemisches, um die genannte feste Form zu erhalten.

2. Verfahren nach Anspruch 1, worin in der Stufe (b) ein Gemisch aus Bestandteilen verdichtet wird, das 3 bis 50 Gew% Wasser als Bindungskomponente enthält.

3. Verfahren nach Anspruch 1 oder 2, worin die Bindungskomponente das wäßrige Lösungsmittel eines Fermentationssaftes oder einen wäßrigen verdünnten Fermentationssaft enthält.

4. Verfahren nach Anspruch 1, worin das Gemisch der Bestandteile 1 bis 95 Gew% eines Bindemittels, ausgewählt aus Speiseölen, Fetten, mit Fett verwandten Verbindungen und Kombinationen hiervon, enthält.

5. Verfahren nach den Ansprüchen 1 bis 4, worin in der Stufe (a) Bestandteile zusammengegeben werden, die Mehl, ein Milchsäure bildendes Bakterium und/oder eine Hefe sowie einen Milchsäure und Essigsäure enthaltenden Fermentationssaft enthalten.

6. Verfahren nach einem der Ansprüche 1 bis 4, worin in der Stufe (a) ein Vorteig durch Fermentation in einem Wasser-Mehl-Gemisch hergestellt wird und dann eine oder mehrere Entwässerungsstufen folgen.

7. Verfahren nach einem der vorstehenden Ansprüche, worin in der Stufe (a) ein Füllmaterial, ausgewählt aus Mehl, Stärke und Calciumcarbonat, zugegeben wird.

8. Verfahren nach einem der Ansprüche 1, 6 und 7, das folgende Stufen beinhaltet:
(i) Herstellen eines Vorteigs durch Fermentation in einem Wasser-Mehl-Gemisch,
(ii) Zugeben von Mehl, um eine Aufschlämmung zu erhalten,
(iii) Erhitzen der in der Stufe (ii) erhaltenen Aufschlämmung mit Wasserdampf, um ein Gelieren zu verursachen und
(iv) Abkühlen, um eine feste Form zu bilden.

9. Verfahren nach Anspruch 6 oder 8, worin die Fermentation unter Einsatz eines Milchsäure bildenden Bakteriums und/oder einer Hefe durchgeführt wird.

10. Verfahren nach einem der Ansprüche 1 bis 7 und 9, worin in der Stufe (b) das Ausbilden der genannten festen Form durch Verdichten erfolgt, wobei ein Extruder eingesetzt oder das Gemisch der Bestandteile in einer Form gepreßt wird.

11. Verfahren nach einem der vorstehenden Ansprüche, worin die genannte feste Form ein Block, eine Kugel, eine Perle, ein Faden oder eine Wurst ist.

12. Vorteigzusammensetzung in fester Form, erhalten durch ein Verfahren gemäß einem der vorstehenden Ansprüche.

13. Vorteig in fester Form, bestehend aus Mehl, einem ausgewählten Mikroorganismus und einer Bindungskomponente, ausgewählt aus Wasser, Speiseölen, Fetten, mit Fett verwandten Verbindungen, Gelbildnern und Kombinationen hiervon, und mit einer Krümeligkeit, die für ein von Hand erfolgendes Teilen durch leichtes Ziehen oder Verbiegen mit den Fingern ausreicht, jedoch während des Verpackens und Transportierens nicht zu einem Auseinanderfallen führt, wobei die feste Form ein Gewicht von etwa 10 g bis 5 kg aufweist.

14. Dosiereinheit, abgeleitet von einer Vorteigzusammensetzung gemäß Anspruch 12 oder 13 zur Verwendung beim Mischen eines Teigs für eine Backware.

15. Verfahren zum Herstellen eines Teigs für eine Backware, welches das Mischen einer Vorteigzusammensetzung gemäß Anspruch 12 oder 13 oder einer oder mehrerer Dosiseinheiten einer Vorteigzusammensetzung nach Anspruch 14 mit den anderen erforderlichen Bestandteilen beinhaltet.

## Revendications

1. Procédé de préparation d'une pâte mère sous une forme solide ayant un poids d'environ 10 g à 5 kg et pouvant être divisée en tirant ou pliant doucement avec les doigts afin de donner des unités de dose pour le mélangeage d'une pâte pour un produit panifié, tout en résistant à la désagrégation lors du conditionnement et du transport, ladite méthode comprenant les étapes consistant à :
(a) préparer un mélange d'ingrédients comprenant les ingrédients fonctionnels d'une pâte mère de fermentation et contenant un composant liant choisi parmi l'eau, les huiles comestibles, les matières grasses, les composés apparentés aux graisses, les agents gélifiants et des combinaisons de ces substances, et
(b) refroidir et/ou compacter ledit mélange afin d'obtenir ladite forme solide.

2. Procédé selon la revendication 1, dans lequel, à l'étape (b), on compacte un mélange d'ingrédients comprenant de 3 à 50 % en poids d'eau comme composant liant.

3. Procédé selon la revendication 1 ou la revendication 2, dans lequel le composant liant comprend le solvant aqueux d'une liqueur de fermentation ou une liqueur de fermentation aqueuse diluée.

4. Procédé selon la revendication 1, dans lequel ledit mélange d'ingrédients comprend de 1 à 95 % en poids d'un agent liant choisi parmi les huiles comestibles, les matières grasses, les composés apparentés aux graisses et des combinaisons de ceux-ci.

5. Procédé selon les revendications 1 à 4, dans lequel, à l'étape (a), on combine des ingrédients comprenant de la farine, une bactérie et/ou une levure produisant de l'acide lactique et une liqueur de fermentation contenant de l'acide lactique et de l'acide acétique.

6. Procédé selon l'une quelconque des revendications 1 à 4, dans lequel, à l'étape (a), on prépare une pâte mère par fermentation dans un mélange d'eau et de farine, suivie d'une ou plusieurs étapes d'égouttage.

7. Procédé selon l'une quelconque des revendications précédentes, dans lequel, à l'étape (a), on ajoute une matière de charge choisie parmi la farine, l'amidon et le carbonate de calcium.

8. Procédé selon l'une quelconque des revendications 1, 6 et 7, comprenant les étapes consistant à :
(i) préparer une pâte mère par fermentation dans un mélange d'eau et de farine,
(ii) ajouter de la farine pour obtenir une bouillie,
(iii) chauffer à la vapeur la bouillie obtenue à l'étape (ii) afin de provoquer la gélatinisation, et
(iv) refroidir afin de former une forme solide.

9. Procédé selon la revendication 6 ou la revendication 8, dans lequel ladite fermentation se fait en utilisant une bactérie et/ou une levure produisant de l'acide lactique.

10. Procédé selon l'une quelconque des revendications 1 à 7 et 9, dans lequel, à l'étape (b), la formation de ladite forme solide se fait par compactage comprenant l'utilisation d'une extrudeuse ou le pressage du mélange d'ingrédients dans un moule.

11. Procédé selon l'une quelconque des revendications précédentes, dans lequel ladite forme solide est un bloc, une sphère, une perle, une ficelle ou un boudin.

12. Préparation de pâte mère obtenue par un procédé selon l'une quelconque des revendications précédentes.

13. Pâte mère sous forme solide composée de farine, d'un micro-organisme sélectionné et d'un composant liant choisi parmi l'eau, les huiles comestibles, les matières grasses, les composés apparentés aux graisses, les agents gélifiants et des combinaisons de ceux-ci, ayant une friabilité suffisante pour une division manuelle en tirant ou pliant doucement avec les doigts mais non susceptible de se désagréger lors de l'emballage et du transport, laquelle forme solide a un poids d'environ 10 g à 5 kg.

14. Unité de dose dérivée d'une préparation de pâte mère selon la revendication 12 ou la revendication 13, pour utilisation dans le mélangeage d'une pâte pour un produit panifié.

15. Procédé de préparation d'une pâte pour un produit panifié, comprenant le mélangeage d'une préparation de pâte mère selon la revendication 12 ou la revendication 13 ou d'une ou plusieurs unités de dose d'une préparation de pâte mère selon la revendication 14 avec les autres ingrédients nécessaires.
